# DEMANDE DE BREVET EUROPEEN

(11) **EP 1 726 942 A2**
(43) Date de publication de la demande: **29.11.2006**
(21) Numéro de dépôt: 06113713.9
(22) Date de dépôt: 09.05.2006
(51) Int. Cl.: G01N 23/06, G01V 8/00

(54) **Détecteur d'objets par analyse d'échos hyperfréquences**

(30) Priorité: 24.05.2005 FR 0505208
(71) Demandeur: THALES, 92200 Neuilly sur Seine (FR)
(72) Inventeur: Millet, Nicolas M., 91140 Villebon sur Yvette (FR); Lehureau, Jean-Claude, 91700 Sainte geneviève des bois (FR)
(74) Mandataire: Bréda, Jean-Marc

(57) **Abrégé**

Le domaine de l'invention est celui des dispositifs de détection d'objets non métalliques dissimulés sur des sujets humains. Ces dispositifs sont plus particulièrement dédiés à la surveillance et à la sécurisation de zones d'accès réservé, comme les zones aéroportuaires.

Le dispositif selon l'invention comporte un détecteur (1) portatif comprenant un émetteur (14) et un récepteur (15) d'ondes hyperfréquences disposés dans une enceinte (10) de géométrie chaotique comportant une pluralité de trous de mesure (11). Le signal hyperfréquence mesuré par ce détecteur dépend de la nature des objets disposés sous les trous.

Un dispositif de traitement (2) relié à ce détecteur permet de corréler les signaux mesurés à des signaux pré-enregistrés. Lorsque la corrélation dépasse un certain seuil correspondant à la présence d'objets suspects, une alarme est émise.

## Description

Le domaine de l'invention est celui des dispositifs de détection d'objets dissimulés sur des sujets humains. Ces dispositifs sont plus particulièrement dédiés à la surveillance et à la sécurisation des zones aéroportuaires et des avions de transport, mais ils peuvent également être disposés à l'entrée de bâtiments protégés ou de zones d'accès contrôlé comme des quais d'embarquement de navires ou de trains.

Pour assurer la sécurité des passagers dans les avions, les valises de soute et les bagages à main sont contrôlés par des systèmes d'imagerie à rayons X. Le passager lui-même ne passe que par un portique détecteur de métaux. Or, il est nécessaire de détecter sur le passager les objets non métalliques présentant un réel danger tel que des explosifs ou des armes en céramique.

Pour combler cette faille de sécurité, certains aéroports ont mis en place, à titre expérimental, des scanners à rayons X pour les passagers eux-mêmes. Toutefois, l'utilisation de rayons X dans un but non médical est interdite dans un grand nombre de pays et en particulier dans la plupart des états européens. En effet, cette technique comporte un réel danger pour l'être humain en cas d'utilisation régulière.

Afin de pallier les inconvénients de l'utilisation des rayons X, il est possible de réaliser une image du corps humain dans le domaine des ondes électromagnétiques millimétriques. En effet, les objets ou les matières dangereuses que l'on cherche à détecter réfléchissent les ondes de manière très différente de celle du corps humain. On peut ainsi facilement les détecter. Cette imagerie peut se faire soit de façon passive, soit de façon active. La technique passive consiste à réaliser une image directement du corps sans l'éclairer avec une source millimétrique particulière. A l'opposé, la technique active permet de faire une image en illuminant le corps, par exemple, avec un faisceau millimétrique connu à une longueur d'onde précise.

Ces techniques ont plusieurs inconvénients. Elles sont complexes à mettre en oeuvre. Certaines utilisent des systèmes coûteux de déflexion à miroir. Leur mise en place systématique dans un aéroport nécessite alors des investissements considérables. D'autre part, les techniques consistant à faire de l'imagerie du corps humain se heurtent à un problème d'éthique. En effet, les vêtements étant peu denses et déstructurés sont transparents au rayonnement millimétrique et par conséquent, le sujet apparaît nu sur l'image millimétrique. Or, le passager n'accepte pas d'être analysé à nu par un opérateur.

Pour pallier ces inconvénients, il est possible de simplifier les systèmes en utilisant de petits dispositifs portatifs qui permettent de faire un balayage du corps observé sans faire d'images. Généralement, ces dispositifs réalisent une mesure de la puissance réfléchie par le corps humain en fonction de la fréquence de l'onde émise. On détermine ainsi les résonances électromagnétiques significatives, révélatrices de la présence d'objets diélectriques. Il est également possible de faire de la détection par des mesures de polarisation ou d'ellipsométrie des ondes réfléchies par le corps humain, les caractéristiques de polarisation dépendant de la nature du corps éclairé. Un des inconvénients principaux de ces systèmes mono-détecteur est que la mesure est ponctuelle ou quasi-ponctuelle. Par conséquent, le contrôle d'un sujet peut prendre un certain temps. Ces dispositifs sont mal adaptés au contrôle rapide d'un grand nombre de passagers. Il peut également être difficile de déterminer très précisément la position ou la taille d'un objet suspect.

Le dispositif proposé résout en grande partie ces inconvénients. En effet, il permet de réaliser à partir d'un couple unique d'émetteur et de détecteur une mesure simultanée en plusieurs points. On couvre ainsi une zone de contrôle importante sans réaliser d'imagerie tout en permettant une localisation assez précise d'un objet suspect, facilitant ainsi l'intervention d'un agent de sécurité pour une fouille plus approfondie. En outre, les ondes millimétriques utilisées par ce dispositif ne sont pas dangereuses pour la santé humaine et permettent une utilisation grand public. L'analyse des signaux ne nécessite pas de puissance de calcul considérable et des moyens informatiques conventionnels suffisent pour les réaliser. Ce dispositif est enfin d'une grande simplicité et peut être réalisé à bas coût.

Le principe physique mis en oeuvre est basé sur les variations d'un signal hyperfréquence émis à l'intérieur d'une enceinte comportant un certain nombre de trous susceptibles de laisser fuir les ondes électromagnétiques. Lorsqu'un de ces trous est au voisinage ou au contact d'un corps, les fuites engendrées par ce trou varient en fonction des propriétés de réflexion de ce corps. Par conséquent, la géométrie de l'enceinte est perturbée et bien entendu, le signal hyperfréquence est modifié. Par l'analyse de ce signal, on retrouve ainsi le lieu de la perturbation. Bien entendu, pour que le dispositif fonctionne correctement, il faut que la perturbation de chaque trou soit importante et décorrélée de celles des autres trous. Pour cela, il est nécessaire que la géométrie de l'enceinte soit chaotique comme on le verra dans la suite de la description.

Plus précisément, l'invention a pour objet un dispositif de détection d'objets diélectriques sur un corps humain comprenant au moins un détecteur comportant une enceinte dans laquelle sont disposés un émetteur d'ondes émettant un signal d'ondes hyperfréquences et un récepteur d'ondes hyperfréquences, ladite enceinte comportant une surface de mesure destinée à être positionnée au voisinage dudit corps humain, caractérisé en ce que ladite enceinte est fortement réfléchissante aux ondes émises par l'émetteur, a une géométrie de type chaotique pour lesdites ondes et que la surface de mesure comporte au moins deux trous.

Avantageusement, le détecteur comporte un émetteur unique faisant également office de récepteur, l'enceinte comporte des parois essentiellement planes, des réflecteurs plans sont disposés à l'intérieur de l'enceinte, un guide diélectrique relie l'émetteur et le récepteur de façon à fournir un signal référence au récepteur et des guides d'ondes sont disposés au niveau des trous de façon à faciliter la fuite des ondes émises par l'émetteur vers l'extérieur de l'enceinte.

Avantageusement, le détecteur est portatif et sa structure comporte, à cette fin, une poignée. D'autre part, le spectre du signal émis a une largeur de quelques gigahertz dans la gamme de fréquences comprise entre 18 et 40 gigahertz.

Avantageusement, le dispositif comporte un système électronique de traitement de données comportant des moyens :
- De mémorisation de signaux pré-enregistrés correspondants aux différents états d'ouverture ou de fermeture des trous;
- D'acquisition des signaux reçus par le détecteur ;
- De traitement desdits signaux reçus ;
- De corrélation desdits signaux traités avec les différents signaux pré-enregistrés ;
- D'avertissement, lorsque le taux de corrélation entre un signal traité et au moins un des signaux pré-enregistrés dépasse un seuil critique, lesdits moyens d'avertissement étant sonores ou visuels.

L'invention concerne également un procédé de détection d'objets diélectriques sur un corps humain à partir d'un dispositif de détection comportant les caractéristiques précédentes, caractérisé en ce qu'il comporte, au moins, les étapes successives suivantes :
- 1^{ère} étape : Réalisation de signaux reçus pré-enregistrés correspondants aux différents états d'ouverture ou de fermeture des trous ;
- 2^{éme} étape : Mise en place du détecteur au voisinage d'un corps humain ;
- 3^{éme} étape : Acquisition du signal reçu correspondant à cet emplacement du détecteur et traitement dudit signal reçu ;
- 4^{éme} étape : Corrélation dudit signal traité avec les différents signaux pré-enregistrés ;
- 5^{éme} étape : Emission d'un signal d'avertissement lorsque le taux de corrélation entre le signal traité et au moins un des signaux pré-enregistrés dépasse un seuil critique.

Avantageusement, la première étape du procédé comporte les sous-étapes suivantes :
- 1^{ère} sous-étape : Les trous de l'enceinte étant tous ouverts, émission d'un signal fréquentiel par l'émetteur ;
- 2^{ème} sous-étape : Enregistrement du signal fréquentiel reçu, ledit signal étant noté signal-fréquentiel-enceinte ;
- 3^{ème} sous-étape : Au moins un des trous étant fermé, émission d'un signal d'émission par l'émetteur ;
- 4^{ème} sous-étape : Enregistrement du signal fréquentiel reçu, ledit signal étant noté signal-fréquentiel-trou ;
- 5^{ème} sous-étape : Calcul d'un signal pré-enregistré obtenu par soustraction du signal-fréquentiel-enceinte au signal-fréquentiel-trou ;
- 6^{ème} sous-étape : Réalisation des sous-étapes 3 à 5 pour les différents états d'ouverture ou de fermeture des trous de façon à obtenir les différents signaux pré-enregistrés.

Avantageusement, la troisième étape comporte les sous-étapes suivantes :
- 1^{ère} sous-étape : Emission d'une rampe de fréquences électromagnétiques par l'émetteur ;
- 2^{ème} sous-étape : Enregistrement du signal fréquentiel reçu dit signal-frequentiel-mesure correspondant audit signal d'émission ;
- 3^{ème} sous-étape : Calcul du signal traité obtenu par soustraction du signal-fréquentiel-enceinte au signal-fréquentiel-mesure.

L'invention sera mieux comprise et d'autres avantages apparaîtront à la lecture de la description qui va suivre, donnée à titre non limitatif et grâce aux figures annexées parmi lesquelles :
- La figure 1 représente une vue d'un dispositif selon l'invention comportant les moyens de détection proprement dits ;
- La figure 2 représente une vue en coupe de l'enceinte de la structure de détection ;
- La figure 3 représente une première variante de réalisation de ladite enceinte ;
- La figure 4 représente la répartition d'énergie électromagnétique à l'intérieur de ladite enceinte ;
- La figure 5 représente le signal fréquentiel obtenu sur le récepteur ;
- Les figures 6 et 7 représentent les variations de signaux en présence ou en l'absence d'objet devant un trou de l'enceinte ;
- La figure 8 représente la méthode de réalisation d'un signal pré-enregistré ;
- La figure 9 représente la mesure d'un objet diélectrique couvrant plusieurs trous de l'enceinte ;
- Les figures 10 et 11 représentent le principe de détection basé sur la corrélation d'un signal mesuré avec les signaux pré-enregistrés ;
- Les figures 12, 13, 14 et 15 représentent 4 variantes de réalisation d'enceinte ;
- La figure 16 représente la mise en oeuvre d'un système de détection selon l'invention.

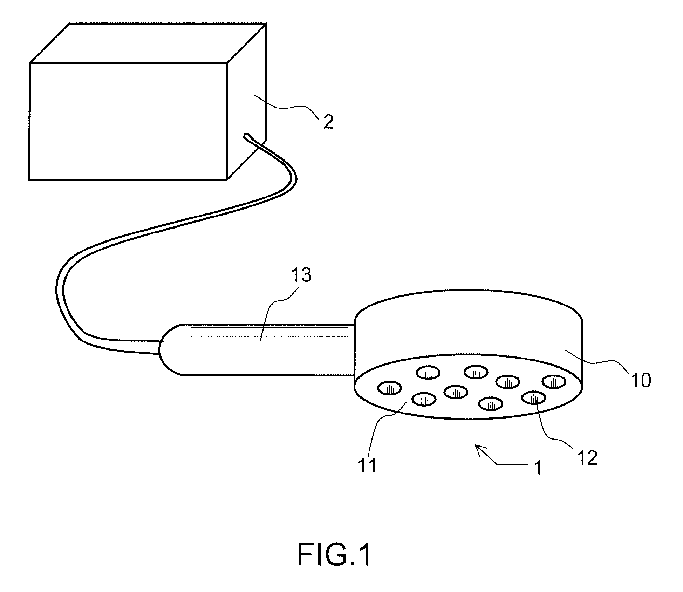

La figure 1 représente une vue du dispositif de détection selon l'invention. Il comprend essentiellement deux éléments principaux :
- un détecteur 1 comportant un système d'émission et de réception de signaux hyperfréquences ;
- un système électronique de traitement de données 2 relié à ladite structure.

Extérieurement, la structure du détecteur 1 comprend essentiellement :
- une enceinte 10 comportant une surface de mesure 11 destinée à être positionnée au voisinage du corps humain, ladite surface 11 comprenant un certain nombre de trous 12;
- une poignée 13 ou tout autre moyen de préhension permettant la manipulation de la structure.

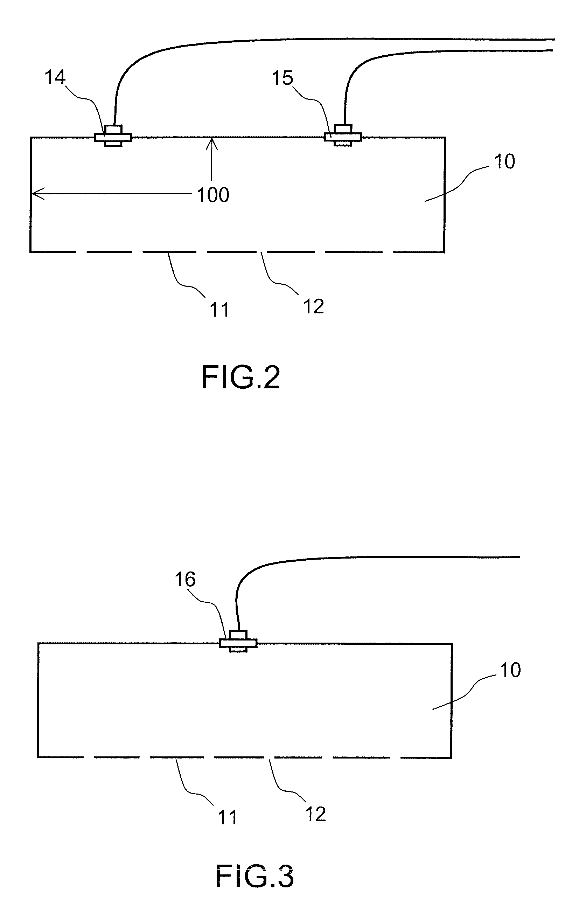

La figure 2 représente une première vue en coupe de l'enceinte 10. Cette enceinte comporte essentiellement des parois réfléchissantes 100 aux ondes millimétriques, une surface de mesure 11 comportant des trous 12. Un émetteur 14 d'ondes hyperfréquence et un récepteur 15 sont disposés à l'intérieur de l'enceinte. Comme indiqué sur la figure 3, l'émetteur et le récepteur peuvent être confondus dans un dispositif unique 16 d'émission/réception.

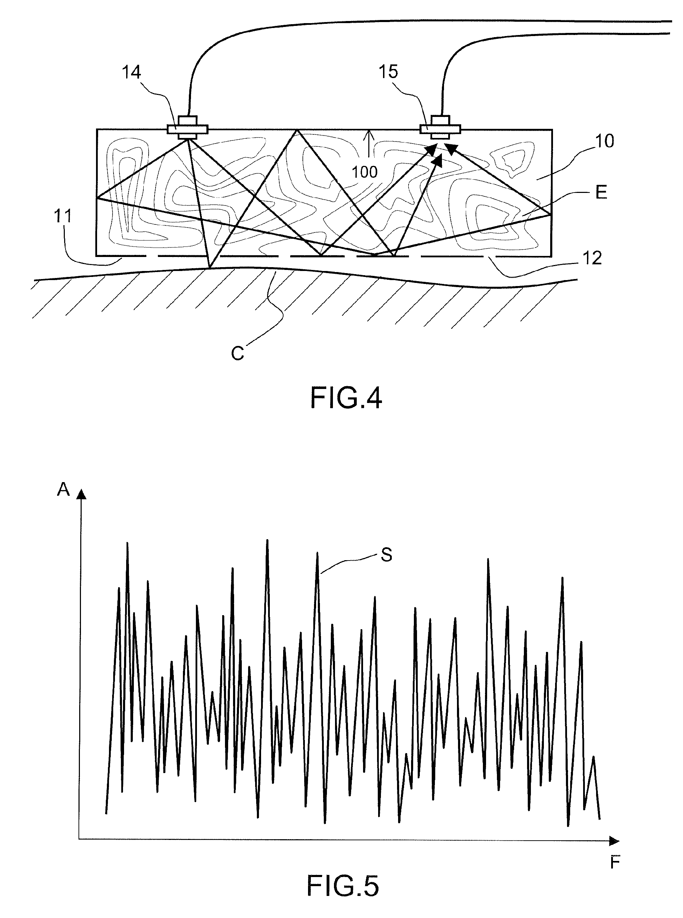

Le principe de fonctionnement est le suivant. Le détecteur est disposé devant un objet C comme indiqué sur la figure 4. L'émetteur 14 émet une impulsion électromagnétique dans la gamme d'ondes hyperfréquences à l'intérieur de l'enceinte 10. Plus précisément, le spectre du signal émis a une largeur de quelques gigahertz dans la gamme de fréquences comprise entre 18 et 40 gigahertz. Comme indiqué sur la figure 4, les parois 100 de l'enceinte étant très réfléchissantes, le signal subit de nombreuses réflexions avant de parvenir au détecteur. Ces réflexions sont symbolisées par les 3 flèches brisées sur la figure 4. L'enceinte se remplit d'énergie comme indiqué par les courbes en traits fins sur la figure 4 qui correspondent aux courbes d'égale énergie. Une partie du signal est également reçue par les trous 12. Selon la nature de l'objet C placé devant ces trous 12, cette partie sera perdue ou réfléchie à l'intérieur de l'enceinte. En effet, le corps humain est très réfléchissant dans le domaine d'onde utilisé. Essentiellement composé d'eau dont l'indice complexe vaut environ 6+3i, le coefficient de réflexion du corps humain vaut environ 70 %. A l'inverse, les corps diélectriques ont des coefficients de réflexion moins importants. Dans la suite du texte, on dira que le trou est ouvert si l'énergie est, en majorité, perdue et que le trou est fermé si l'énergie est, en majorité, réfléchie à l'intérieur de l'enceinte.

Par conséquent, le signal parvenant au récepteur dépend à la fois de la géométrie de l'enceinte et de la nature du corps placé devant les trous. Pour que le signal soit exploitable, il faut que deux conditions soient remplies :
- la variation du signal due à un changement d'état d'un trou doit être significative ;
- les variations de signal dues à deux trous différents doivent être sensiblement différentes de façon à différentier facilement les trous.

Pour réunir ces deux conditions, la cavité doit être de nature chaotique de façon à la rendre fortement sensible aux faibles perturbations et en particulier aux changements d'état des trous. Dans ces conditions, la réponse percussionnelle de la cavité est donc extrêmement chahutée. Une grande quantité d'impulsions arrivent sur l'émetteur à des intervalles plus ou moins longs après un trajet plus ou moins complexe dans l'enceinte 10.

Le signal temporel ainsi obtenu est difficilement numérisable par un convertisseur analogique numérique. Aussi, pour faciliter la réalisation électronique, on génère une rampe de fréquence correspondant aux composantes spectrales du signal impulsionnel et on mesure la puissance transmise S pour chaque fréquence. Mathématiquement, le signal mesuré ne comporte que l'information de puissance, l'information de phase étant perdue et il correspond à la transformée de Fourier de l'autocorrélation de la réponse percussionnelle de l'enceinte. A titre d'exemple, l'amplitude A de ce signal S en fonction de la fréquence F est montrée en figure 5.

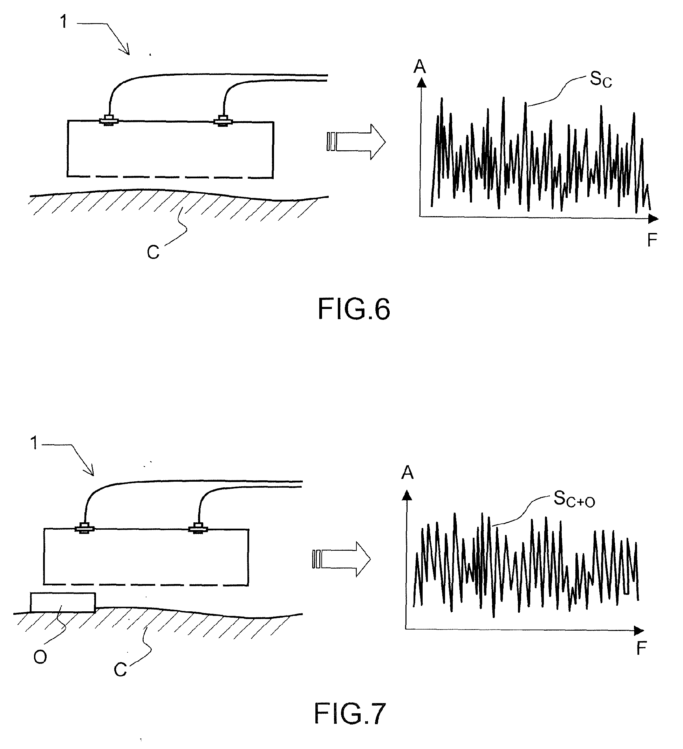

Les figures 6 et 7 montrent les variations du signal fréquentiel S en fonction de la présence ou de l'absence d'un objet O sur un corps C. On obtient les signaux fréquentiels S_{C} et S_{C+O}. En tant que tels, les signaux sont encore trop complexes pour être facilement exploités.

Pour obtenir un traitement du signal à la fois simple et efficace, le procédé de détection d'objets diélectriques sur un corps humain selon l'invention comporte, au moins, les étapes successives suivantes :
- 1^{ère} étape : Réalisation de signaux reçus pré-enregistrés correspondants aux différents états d'ouverture ou de fermeture des trous ;
- 2^{éme} étape : Mise en place du détecteur au voisinage d'un corps humain ;
- 3^{éme} étape : Acquisition du signal reçu correspondant à cet emplacement du dispositif et traitement dudit signal reçu ;
- 4^{éme} étape : Corrélation dudit signal traité avec les différents signaux pré-enregistrés ;
- 5^{éme} étape : Emission d'un signal d'avertissement lorsque le taux de corrélation entre le signal traité et au moins un des signaux pré-enregistrés dépasse un seuil critique.

La méthode de corrélation permet d'obtenir simplement une information sûre sur la présence ou l'absence d'objets suspects.

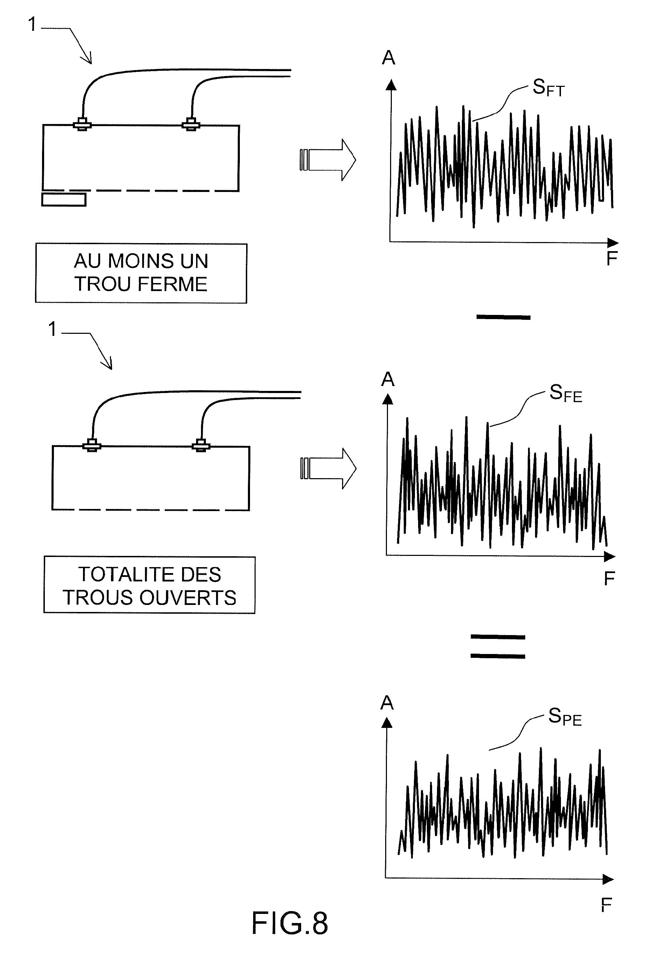

Plus précisément, la première étape du procédé comporte les sous-étapes suivantes illustrées en figure 8 :
- 1^{ère} sous-étape : Les trous de l'enceinte étant tous ouverts, émission d'un signal d'émission par l'émetteur, cadre TOTALITE DES TROUS OUVERTS de la figure 8;
- 2^{ème} sous-étape : Enregistrement du signal fréquentiel correspondant, ledit signal étant noté signal-fréquentiel-enceinte S_{FE};
- 3^{ème} sous-étape : Au moins un des trous étant fermé, émission d'un signal d'émission par l'émetteur, cadre AU MOINS UN TROU FERME de la figure 8 ;
- 4^{ème} sous-étape : Enregistrement du signal fréquentiel correspondant, ledit signal étant noté signal-fréquentiel-trou S_{FT};
- 5^{ème} sous-étape : Calcul d'un signal pré-enregistré S_{PE} obtenu par soustraction du signal-fréquentiel-enceinte S_{FE} au signal-fréquentiel-trou S_{FT} ;
- 6^{ème} sous-étape : Réalisation des sous-étapes 3 à 5 pour les différents états d'ouverture ou de fermeture des trous de façon à obtenir les différents signaux pré-enregistrés.

On obtient ainsi un certain nombre de signaux pré-enregistrés qui sont la signature des états de fermeture ou d'ouverture des différents trous.

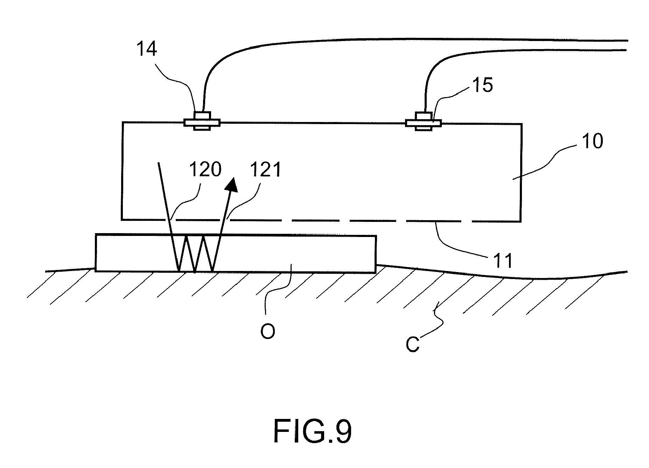

Il est à noter que les signaux pré-enregistrés doivent représenter au moins toutes les configurations où un trou est fermé. Par conséquent, si l'enceinte comporte N trous, au moins N signaux doivent être pré-enregistrés. Cependant, il est possible que certains corps O, jouant le rôle de guide diélectrique relie deux trous entre eux comme illustré sur la figure 9. Dans ce cas, une partie de l'énergie émise par l'émetteur 14 sortant de la boîte par le trou 120 de la figure 9 va repasser par le trou 121 et sera ensuite mesurée par le détecteur 15. Ainsi, le corps O crée une corrélation entre les trous 120 et 121. Il est, bien entendu possible de mémoriser des signaux pré-enregistrés correspondant à ce type de configuration.

La troisième étape comporte les sous-étapes suivantes :
- 1^{ère} sous-étape : Emission d'un signal d'émission par l'émetteur;
- 2^{ème} sous-étape: Enregistrement du signal fréquentiel correspondant audit signal d'émission, ledit signal étant noté signal-fréquentiel-mesure ;
- 3^{ème} sous-étape : Calcul du signal traité obtenu par soustraction du signal-fréquentiel-enceinte au signal-fréquentiel-mesure.

Dans les différentes étapes et sous-étapes du procédé, les signaux pré-enregistrés et traités sont obtenus par soustraction du signal-fréquentiel-enceinte. Cette opération permet d'éviter que le signal de l'enceinte ne vienne perturber la mesure finale en introduisant une corrélation parasite liée à l'enceinte.

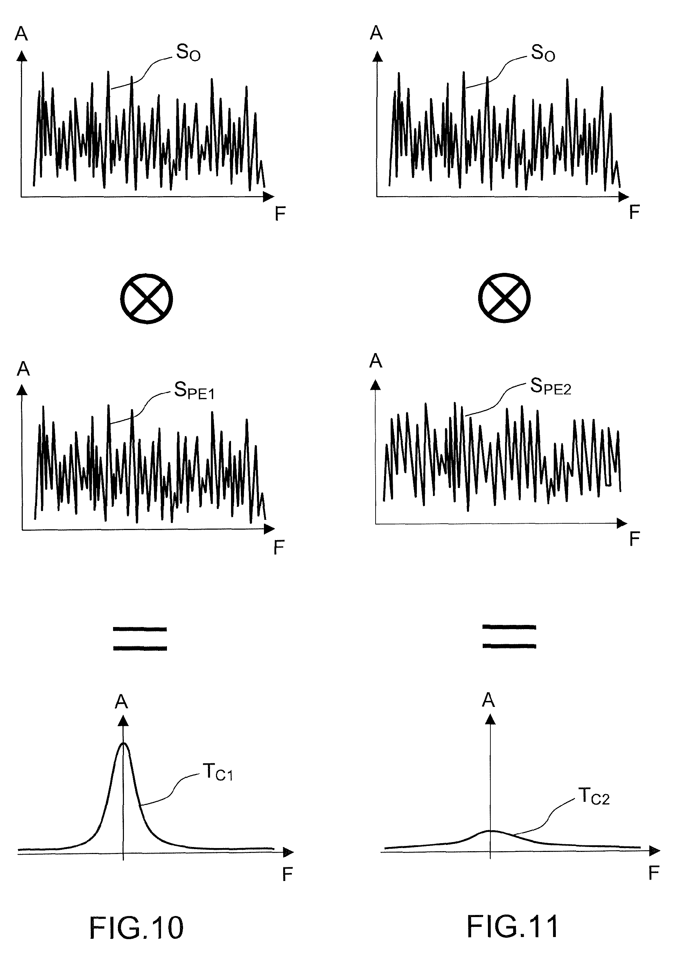

La quatrième étape du procédé est illustrée sur les figures 10 et 11. Dans les deux cas, les signaux traités S_{O} obtenus par mesure sont corrélés avec les signaux pré-enregistrés S_{PE1} et S_{PE2}. Sur ces figures, l'opération de corrélation est classiquement représentée par une croix centrée dans un cercle.

Sur la figure 10, le signal mesuré est quasiment identique au signal pré-enregistré S_{PE1}. Dans ce cas, le taux de corrélation est important, ce qui signifie que le signal mesuré est représentatif d'une configuration très voisine du signal pré-enregistré, qui correspond, par exemple, à un certain trou fermé.

Sur la figure 11, le signal mesuré est différent du signal pré-enregistré S_{PE2}. Dans ce cas, le taux de corrélation est faible, ce qui signifie que le signal mesuré n'est pas représentatif de la configuration du signal pré-enregistré, qui correspond, par exemple, à un certain trou fermé.

En comparant le signal traité à l'ensemble des signaux pré-enregistrés, on met en évidence les corrélations éventuelles. Ainsi, il devient possible de détecter des objets cachés par cette méthode.

Pour réaliser ce procédé, le dispositif comporte un système de traitement électronique de données comportant des moyens :
- De mémorisation de signaux pré-enregistrés correspondants aux différents états d'ouverture ou de fermeture des trous ;
- D'acquisition des signaux reçus par le détecteur ;
- De traitement desdits signaux reçus ;
- De corrélation desdits signaux traités avec les différents signaux pré-enregistrés ;
- D'avertissement lorsque le taux de corrélation entre un signal traité et au moins un des signaux pré-enregistrés dépasse un seuil critique, lesdits moyens d'avertissement étant sonores ou visuels.

La puissance de calcul nécessaire pour réaliser le traitement des signaux n'est pas considérable. Si l'on suppose qu'un opérateur humain déplace la structure à une vitesse de 1 mètre/seconde et que l'on souhaite avoir une résolution de l'ordre du centimètre, il suffit que le système puisse réaliser les mesures à une cadence de 100 hertz, soit une mesure toutes les 10 millisecondes. Or, chaque signal peut être numériser sur 1000 points. Si l'on effectue 100 corrélations avec des signaux pré-enregistrés, il faut donc réaliser 100 000 opérations entre deux mesures, soit 100 000 opérations en 10 millisecondes. Chaque opération doit être réalisée à une fréquence minimale de 10 mégaHertz, ce qui est très faible avec les moyens de calcul actuels.

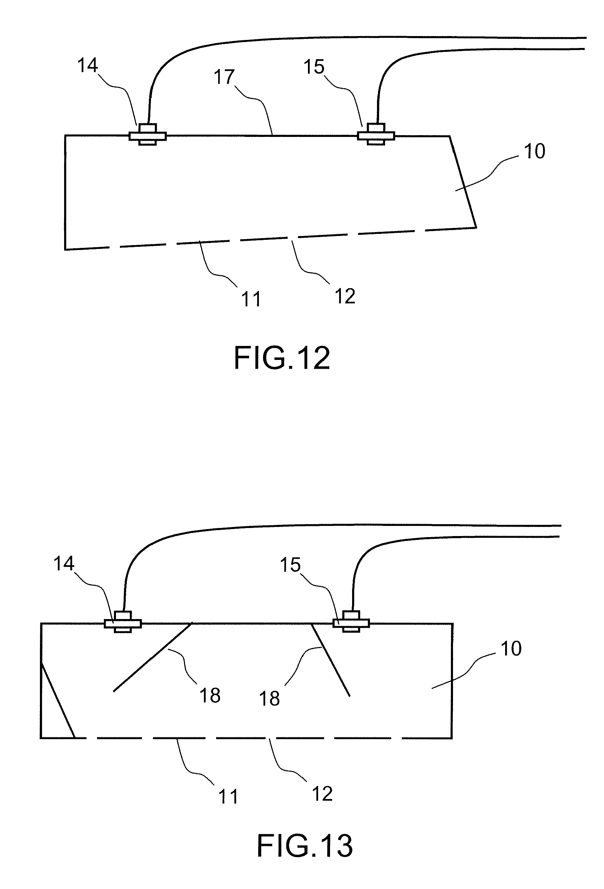

Comme il a été dit, un des points importants du dispositif est que la géométrie de l'enceinte soit chaotique. A cette fin, une première solution simple consiste à éviter que les surfaces principales de l'enceinte soient parallèles. La figure 12 illustre cette configuration où la surface 17 n'est pas parallèle à la surface de mesure 12, les deux surfaces étant sensiblement planes. Une autre disposition possible est illustrée en figure 13. Dans ce cas, des déflecteurs 18 introduits dans une enceinte 10 de forme simple rendent celle-ci chaotique. Ces déflecteurs peuvent être positionnés entre émetteur et récepteur, par exemple.

De la même façon, les signaux sont sensibles aux déformations de l'enceinte. Il faut, par conséquent, choisir une structure d'enceinte à la fois rigide et peu sensible aux variations thermiques. Pour une cavité dont les dimensions sont de l'ordre de quelques centimètres, les déformations ne doivent pas excéder quelques microns.

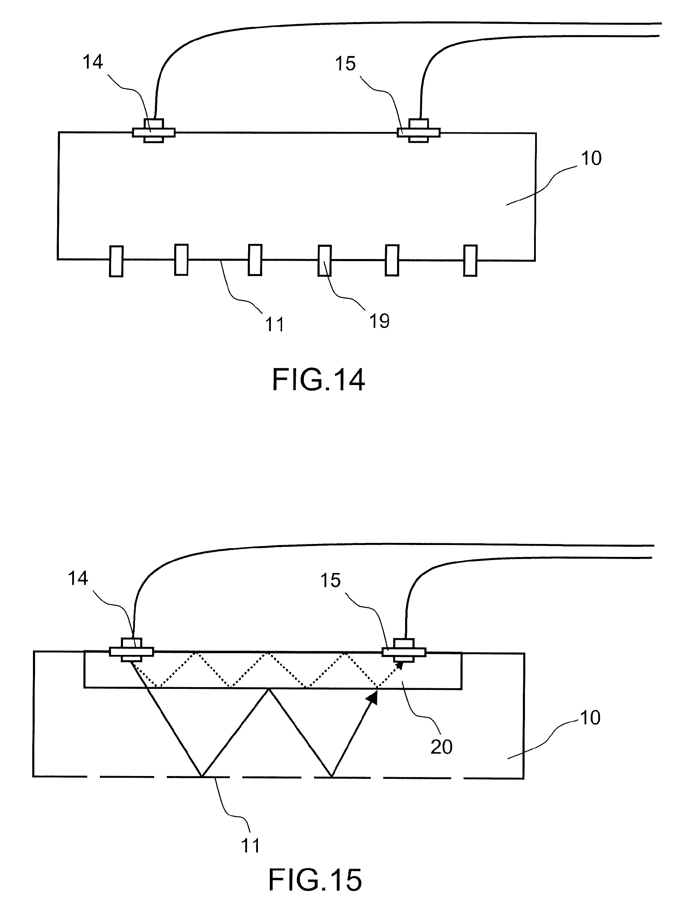

Un point également important est que l'énergie électromagnétique puisse sortir par les trous en quantité suffisante de façon que la différence entre un trou ouvert ou fermé soit significative. Pour éviter d'avoir des trous trop importants, une solution possible est illustrée en figure 14. Des guides d'onde 19 sont placés au niveau des trous pour faciliter les pertes. Ces guides peuvent être des guides diélectriques ou coaxiaux.

On a vu également que le signal reçu comportait uniquement l'information d'amplitude ou d'intensité du signal. L'information de phase étant perdue. Pour améliorer le traitement et affiner les mesures, cette dernière information peut se révéler intéressante. Un moyen simple de l'obtenir est illustré en figure 15. Un guide d'onde 20 envoie de l'émetteur vers le récepteur une onde de référence. Les interférences de cette onde référence avec l'onde mesurée permettent de déterminer la phase relative entre ces deux ondes. L'information de phase étant connue à une constante près, il devient alors possible de réaliser une transformée de Fourier de la réponse percussionnelle de l'enceinte. Ce procédé s'apparente à celui mis en oeuvre pour réaliser un enregistrement holographique où les interférences entre une onde de mesure et une onde de référence permettent d'enregistrer sur un même support phase et intensité de l'onde de mesure optique.

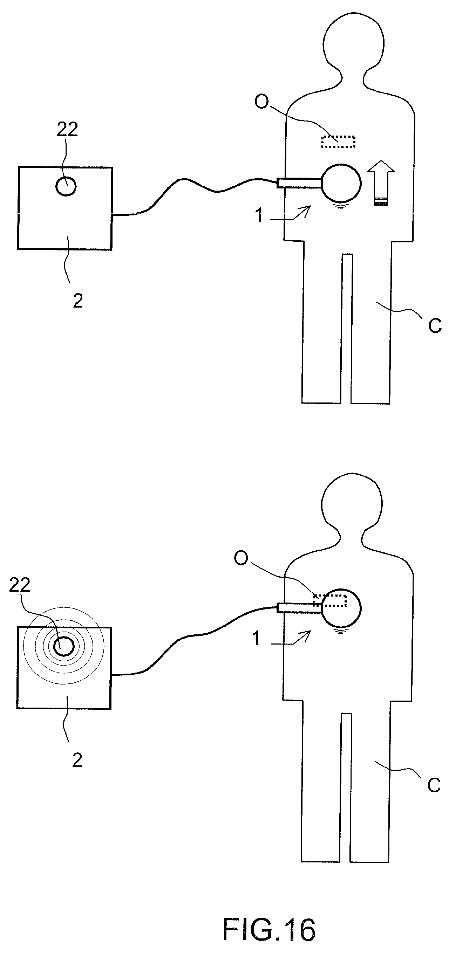

La figure 16 représente un dispositif de détection d'objets O sur un sujet C selon l'invention. Un objet suspect est dissimulé sur le sujet C. Le dispositif comporte essentiellement :
- Une structure 1 comportant le système d'émission et de réception de signaux hyperfréquences ;
- un système de traitement 2 des signaux reçus comportant éventuellement des moyens d'alarme 22 en cas de détection d'objets suspects, représentés par un cercle sur le boîtier 2 de la figure 16.

L'utilisation du dispositif est très simple. Un agent de sécurité, non représenté sur la figure 1, balaie le corps de la personne à contrôler.

Sur la partie haute de la figure, aucun objet suspect n'est situé sous les trous de la structure. Le signal mesuré ne peut être corrélé avec aucun des signaux pré-enregistrés. L'alarme n'est pas activée.

Sur la partie basse de la figure 16, l'objet suspect se trouve sous les trous de la structure. Dans ce cas, le signal mesuré correspond à au moins un des signaux pré-enregistré. L'alarme 22 est activée.

## Revendications

1. Dispositif de détection d'objets diélectriques sur un corps humain comprenant au moins un détecteur (1) comportant une enceinte (10) dans laquelle sont disposés un émetteur (14) d'ondes émettant un signal d'ondes hyperfréquences et un récepteur (15) d'ondes hyperfréquences, ladite enceinte comportant une surface (11) de mesure destinée à être positionnée au voisinage dudit corps humain, **caractérisé en ce que** ladite enceinte est fortement réfléchissante aux ondes émises par l'émetteur, a une géométrie de type chaotique pour lesdites ondes et que la surface de mesure comporte au moins deux trous (12).

2. Dispositif de détection selon la revendication 1, **caractérisé en ce que** la structure (1) comporte un émetteur unique (16) faisant également office de récepteur.

3. Dispositif de détection selon l'une des revendications précédentes, **caractérisé en ce que** l'enceinte (10) comporte des parois essentiellement planes.

4. Dispositif de détection selon la revendication 3, **caractérisé en ce que** des réflecteurs (18) plans sont disposés à l'intérieur de l'enceinte (10).

5. Dispositif de détection selon l'une des revendications 3 ou 4, **caractérisé en ce qu'**un guide (20) diélectrique relie l'émetteur (14) et le récepteur (15) de façon à fournir un signal référence au récepteur.

6. Dispositif de détection selon l'une des revendications précédentes, **caractérisé en ce que** des guides d'ondes (19) sont disposés au niveau des trous (12) de façon à faciliter la fuite des ondes émises par l'émetteur vers l'extérieur de l'enceinte.

7. Dispositif de détection selon l'une des revendications précédentes, **caractérisé en ce que** la structure est portative et comporte, à cette fin, une poignée (13).

8. Dispositif de détection selon l'une des revendications précédentes, **caractérisé en ce que** le spectre du signal émis se situe dans la gamme de fréquences comprise entre 18 et 40 gigahertz.

9. Dispositif de détection selon l'une des revendications précédentes, **caractérisé en ce que** le dispositif comporte, en outre, un système de traitement de données (2) comportant des moyens :
• De mémorisation de signaux pré-enregistrés correspondants aux différents états d'ouverture ou de fermeture des trous;
• D'acquisition des signaux reçus par le détecteur (1);
• De traitement desdits signaux reçus ;
• De corrélation desdits signaux traités avec les différents signaux pré-enregistrés ;
• D'avertissement (22) lorsque le taux de corrélation entre un signal traité et au moins un des signaux pré-enregistrés dépasse un seuil critique, lesdits moyens d'avertissement étant sonores ou visuels.

10. Procédé de détection d'objets diélectriques sur un corps humain à partir d'un dispositif de détection selon la revendication 9, **caractérisé en ce qu'**il comporte, au moins, les étapes successives suivantes :
• 1^{ère} étape : Réalisation de signaux reçus pré-enregistrés S_{PE} correspondants aux différents états d'ouverture ou de fermeture des trous (11) ;
• 2^{éme} étape : Mise en place du détecteur (1) au voisinage d'un corps humain à analyser ;
• 3^{éme} étape : Acquisition du signal reçu correspondant à cet emplacement du détecteur et traitement dudit signal reçu ;
• 4^{éme} étape : Corrélation dudit signal traité avec les différents signaux pré-enregistrés S_{PE} ;
• 5^{éme} étape : Emission d'un signal d'avertissement lorsque le taux de corrélation entre le signal traité et au moins un des signaux pré-enregistrés dépasse un seuil critique.

11. Procédé de détection selon la revendication précédente, **caractérisé en ce que** la première étape comporte les sous-étapes suivantes :
• 1^{ère} sous-étape : Les trous de l'enceinte étant tous ouverts, émission d'une rampe de fréquence par l'émetteur ;
• 2^{ème} sous-étape : Enregistrement du signal reçu noté signal-fréquentiel-enceinte S_{FE} correspondant audit signal d'émission ;
• 3^{ème} sous-étape : Au moins un des trous étant fermé, émission d'une rampe de fréquence par l'émetteur ;
• 4^{ème} sous-étape : Enregistrement du signal fréquentiel reçu noté signal-fréquentiel-trou S_{FT} correspondant audit signal d'émission ;
• 5^{ème} sous-étape : Calcul d'un signal pré-enregistré S_{PE} obtenu par soustraction du signal-fréquentiel-enceinte S_{FE} au signal-fréquentiel-trou S_{FT} ;
• 6^{ème} sous-étape : Réalisation des sous-étapes 3 à 5 pour les différents états d'ouverture ou de fermeture des trous de façon à obtenir les différents signaux pré-enregistrés.

12. Procédé de détection selon l'une des revendications 10 ou 11, **caractérisé en ce que** la troisième étape comporte les sous-étapes suivantes :
• 1^{ère} sous-étape : Emission d'une rampe de fréquence par l'émetteur ;
• 2^{ème} sous-étape : Enregistrement du signal fréquentiel reçu dit signal-fréquentiel-mesure correspondant audit signal d'émission ;
• 3^{ème} sous-étape : Calcul du signal traité obtenu par soustraction du signal-fréquentiel-enceinte au signal-fréquentiel-mesure.
